# FASCICULE DE BREVET EUROPEEN

(11) **EP 1 224 444 B1**
(45) Date de publication et mention de la délivrance du brevet: **13.10.2004**
(21) Numéro de dépôt: 00971497.3
(22) Date de dépôt: 25.10.2000
(51) Int. Cl.: G01J 3/28, G02F 1/13, G01N 21/00

(54) **DISPOSITIF DE MESURE DE LA REPARTITION SPATIALE DE L'EMISSION SPECTRALE D'UN OBJET**
VORRICHTUNG ZUR BESTIMMUNG DER RÄUMLICHEN VERTEILUNG DER SPEKTRALEN EMISSION EINES OBJEKTS
DEVICE FOR MEASURING SPATIAL DISTRIBUTION OF THE SPECTRAL EMISSION OF AN OBJECT

(30) Priorité: 26.10.1999 FR 9913342
(43) Date de publication de la demande: 24.07.2002
(73) Titulaire: ELDIM, 14200 Herouville Saint-Clair (FR)
(72) Inventeur: LEROUX, Thierry, F-14150 Ouistreham (FR)
(74) Mandataire: Weber, Etienne Nicolas
(86) Numéro de dépôt international: PCT/FR2000/002965
(87) Numéro de publication internationale: WO 2001/031303

(56) Documents cités:
- FR-A- 2 749 388
- SALEH & KANGUA: "The Fourier scope: an analytical instrument for measuring LCD viewing-angle characteristics" JOURNAL OF THE SOCIETY FOR INFORMATION DISPLAY, vol. 4, no. 1, avril 1996 (1996-04), pages 33-39, XP000915292 San Jose, US

## Description

### DOMAINE TECHNIQUE

La présente invention concerne un dispositif de mesure de la répartition spatiale de l'émission spectrale d'un objet.

Elle s'applique notamment à des objets tels que, par exemple, les écrans de projection, les tubes cathodiques, les dispositifs d'éclairage, les écrans plats d'affichage tels que les écrans à cristaux liquides, les écrans à plasma, les écrans électroluminescents et les écrans à micropointes (« microtip screens »), ainsi que les surfaces réfléchissantes.

### ÉTAT DE LA TECHNIQUE ANTÉRIEURE

On connaît déjà plusieurs techniques de mesure des caractéristiques colorimétriques de l'émission ou de la réflexion de la lumière par divers objets (par exemple ceux qui sont énumérés ci-dessus) en fonction de l'angle d'observation.

A ce sujet on se reportera aux documents suivants :
[1] EP 0 286 529 A
[2] FR 2 729 220 A
[3] FR 2 749 388 A.

On connaît en particulier une technique électromécanique consistant à déplacer un équipement de mesure, tel qu'un photomètre, autour d'un objet que l'on veut mesurer. A ce sujet, on se reportera par exemple au document [1] et en particulier aux figures 2a, 2b et 3 de ce document [1].

Cette technique connue présente de nombreux inconvénients.

En particulier, la mesure se fait par échantillonnage. Seules les positions choisies sont mesurées et aucune information n'est connue sur la luminance dans les positions, ou angles, intermédiaires. Aucune certitude n'existe quant à la valeur de la luminance en dehors de celle des points mesurés.

De plus, les mesures, de durée T₀, se font en série, les unes après les autres. Si un grand nombre N de points sont à mesurer afin de pouvoir disposer d'un maximum d'informations, la mesure complète de l'objet prend un temps NxT₀.

On connaît aussi une autre technique de mesure qui utilise une optique de Fourier associée à un capteur matriciel de type CCD ou autre. A ce sujet, on se reportera par exemple au document [3] et en particulier à la figure 1 de ce document [3].

Cette autre technique connue consiste à obtenir, en une seule fois, la répartition spatiale de la lumière émise ou réfléchie par un objet à mesurer sur ce capteur matriciel. Les différents points de l'image correspondent aux mesures obtenues pour les caractéristiques d'émission à différents angles de l'objet à mesurer.

Les principaux avantages de cette autre technique connue sont les suivants :

La vitesse de mesure est accrue. En effet la mesure, de durée T₁, ne dépend pas, ou dépend peu, du nombre de points mesurés.

Toutes les informations sont disponibles.

Il n'y a pas de risque de voir un détail de la répartition angulaire de luminance échapper à la mesure.

Une intégration (sommation) de l'ensemble des valeurs obtenues donne avec certitude une valeur du flux lumineux émis par l'objet.

Un grave inconvénient est cependant apparu lors de l'utilisation de cette autre technique connue. En effet (on se reportera aux documents [1] et [2]), la mesure du flux lumineux se fait sans tenir compte de la répartition en longueur d'onde de la lumière collectée. Ceci peut être restrictif
- si l'on cherche à obtenir les variations spectrales en fonction de l'angle d'observation,
- en colorimétrie où il est quelque fois complexe et toujours imprécis de calculer les coordonnées colorimétriques sans connaître la répartition spectrale de la lumière, et
- en réflectométrie où la connaissance du spectre de la source lumineuse utilisée pour illuminer un objet est indispensable pour évaluer la capacité de l'objet à réfléchir telle ou telle longueur d'onde.

### EXPOSÉ DE L'INVENTION

La présente invention a pour but de remédier à ces inconvénients.

Elle a pour objet un dispositif qui combine les avantages de la technique décrite dans le document [3], avantages que l'on a vu plus haut, avec les avantages d'une mesure spectrale.

Certes, on pourrait envisager (comme le font les documents [2] et [3]), de placer dans le trajet du signal lumineux une série de filtres sélectifs permettant de sélectionner une plage de longueurs d'onde.

Cependant, étant donné que l'étendue du spectre visible est de 340 nm (car ce spectre visible va de 380 nm à 720 nm) et que la résolution nécessaire à des mesures photométriques est de l'ordre de 4 nm, 85 filtres successifs (et 85 mesures successives) seraient nécessaires. Une telle technique conduirait donc à des temps de mesure importants.

En outre, la mise en place de 85 filtres dans le trajet du signal lumineux n'est pas aisée et le coût de ces 85 filtres n'est pas négligeable, la fabrication de filtres de 4 nm de bande passante étant particulièrement délicate.

On pourrait néanmoins songer à utiliser un nombre restreint de filtres, chaque filtre ayant une bande passante de 10 nm. Mais on ne disposerait alors que de 34 filtres et la précision du dispositif de mesure s'en trouverait dégradée.

Le dispositif objet de l'invention combine les avantages indiqués plus haut sans présenter les inconvénients que l'on vient d'exposer à propos de cette utilisation d'une série de filtres sélectifs.

De façon précise, la présente invention a pour objet un dispositif de mesure de la répartition spatiale de l'émission spectrale d'une zone de mesure d'un objet, ce dispositif étant caractérisé en ce qu'il comprend :
- un premier objectif prévu pour former, dans le plan de Fourier de ce premier objectif, une première image constituant la transformée de Fourier optique de la zone de mesure,
- un premier diaphragme,
- un deuxième objectif disposé entre le premier objectif et le premier diaphragme et coopérant avec ce premier objectif pour que l'ouverture du premier diaphragme soit optiquement conjuguée de la zone de mesure par les premier et deuxième objectifs et que la zone de mesure, lorsqu'elle est observée à travers le premier diaphragme, ait une surface apparente approximativement indépendante de la direction d'observation, les premier et deuxième objectifs ayant un axe optique commun qui constitue l'axe optique du dispositif,
- un objectif de transfert, placé après le premier diaphragme, pour transporter la première image vers un capteur bidémensionnel d'images,
- des moyens de sélection d'une portion rectiligne de la première image suivant une direction de sélection,
- des moyens de dispersion de lumière, prévus pour disperser la lumière correspondant à la portion sélectionnée de la première image,
- un capteur bidimensionnel d'images, prévu pour recevoir la lumière ainsi dispersée et fournir des signaux représentatifs de cette lumière dispersée, et
- des moyens de traitement de ces signaux, aptes à déterminer la réponse spectrale de la zone de mesure pour chaque point de la portion rectiligne de la première image.

De préférence, le premier diaphragme a une ouverture circulaire.

De préférence également, les moyens de dispersion sont aptes à disperser la lumière suivant une direction de dispersion qui est perpendiculaire à la direction de sélection.

Selon un mode de réalisation particulier du dispositif objet de l'invention, les moyens de sélection comprennent une fente rectiligne qui est formée à travers un matériau opaque à la lumière issue de l'objet.

Selon un mode de réalisation préféré du dispositif objet de l'invention, la direction de sélection passe par l'axe optique du dispositif.

Dans ce cas, le dispositif objet de l'invention peut comprendre en outre des moyens de rotation de l'objet autour de l'axe optique du dispositif. Cela permet de mesurer les caractéristiques de la zone de mesure pour différentes valeurs de l'azimut ϕ.

En variante, le dispositif objet de l'invention peut comprendre en outre des moyens de déplacement des moyens de sélection, de telle façon que la direction de sélection balaye la première image, les moyens de sélection sélectionnant ainsi des portions rectilignes successives de cette première image.

Dans ce cas, selon un mode de réalisation particulier de l'invention, les moyens de sélection comprennent une fente rectiligne qui est formée à travers un matériau opaque à la lumière issue de l'objet et qui définit la direction de sélection, cette fente passant par l'axe optique du dispositif, et les moyens de déplacement sont des moyens de rotation de la fente autour de cet axe optique et les moyens de dispersion sont aptes à disperser la lumière suivant une direction de dispersion qui est maintenue perpendiculaire à la direction de sélection et donc à la fente.

Dans ce cas également, selon un autre mode de réalisation particulier, les moyens de sélection comprennent une fente rectiligne qui est formée à travers un matériau opaque à la lumière issue de l'objet et qui définit la direction de sélection, cette fente passant par l'axe optique du dispositif, et les moyens de déplacement sont des moyens de rotation de la fente autour de cet axe optique et le dispositif comprend en outre des moyens dé-rotateurs qui sont disposés entre la fente et les moyens de dispersion et prévus pour maintenir constante l'orientation de la lumière dispersée qui est reçue par le capteur.

Le dispositif objet de l'invention peut comprendre en outre une source lumineuse et des moyens semi-réfléchissants prévus pour réfléchir la lumière émise par cette source lumineuse vers l'objet afin d'illuminer une zone de celui-ci contenant la zone de mesure et pour laisser passer la lumière qui est issue de cette zone de mesure ainsi éclairée et qui est dirigée vers le premier diaphragme.

Dans ce cas, selon un premier mode de réalisation particulier, les moyens semi-réfléchissants sont disposés entre le deuxième objectif et le premier diaphragme et le dispositif comprend en outre :
- un deuxième diaphragme dont l'ouverture délimite la zone illuminée, cette ouverture du deuxième diaphragme étant optiquement conjuguée de la zone illuminée par l'ensemble formé par les premier et deuxième objectifs, et
- un troisième objectif,
la source lumineuse étant disposée dans un plan qui est optiquement conjugué du plan de Fourier du premier objectif par l'ensemble formé par les deuxième et troisième objectifs.

Dans ce cas également, selon un deuxième mode de réalisation particulier, les moyens semi-réfléchissants sont disposés entre le premier objectif et le deuxième objectif et le dispositif comprend en outre :
- des troisième et quatrième objectifs, et
- un deuxième diaphragme dont l'ouverture délimite la zone illuminée, cette ouverture du deuxième diaphragme étant optiquement conjuguée de la zone illuminée par l'ensemble formé par les premier et quatrième objectifs,
la source lumineuse étant disposée dans un plan qui est optiquement conjugué du plan de Fourier du premier objectif par l'ensemble formé par les troisième et quatrième objectifs.

### BRÈVE DESCRIPTION DES DESSINS

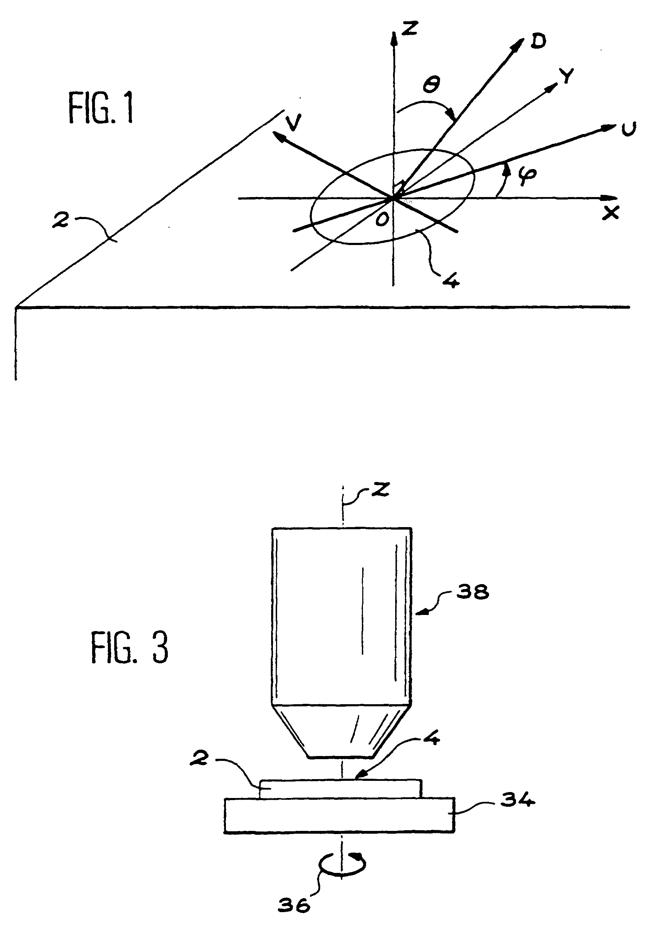

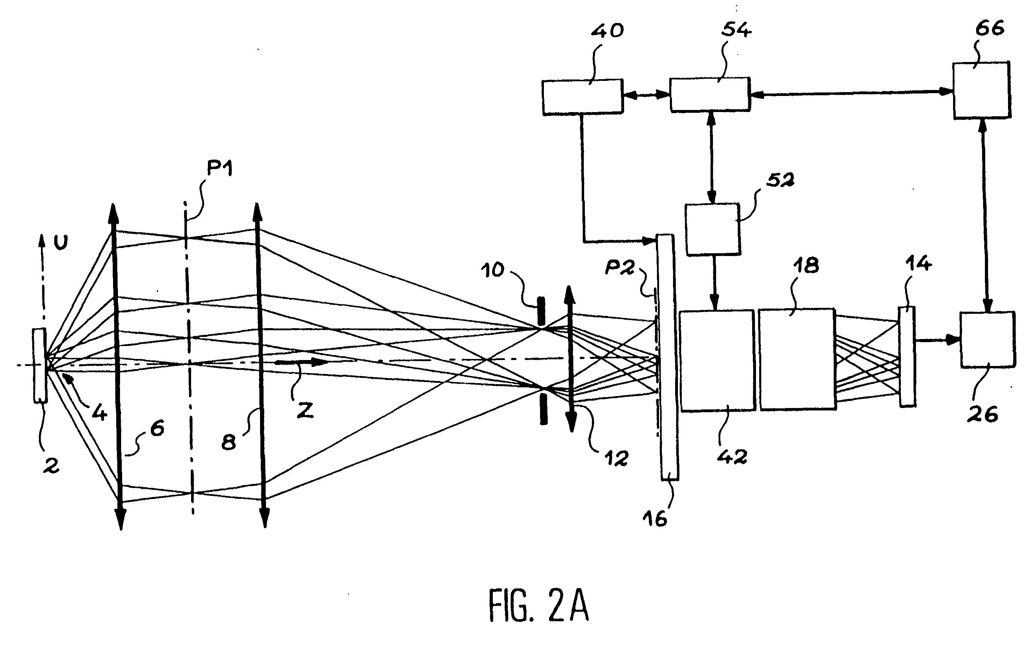

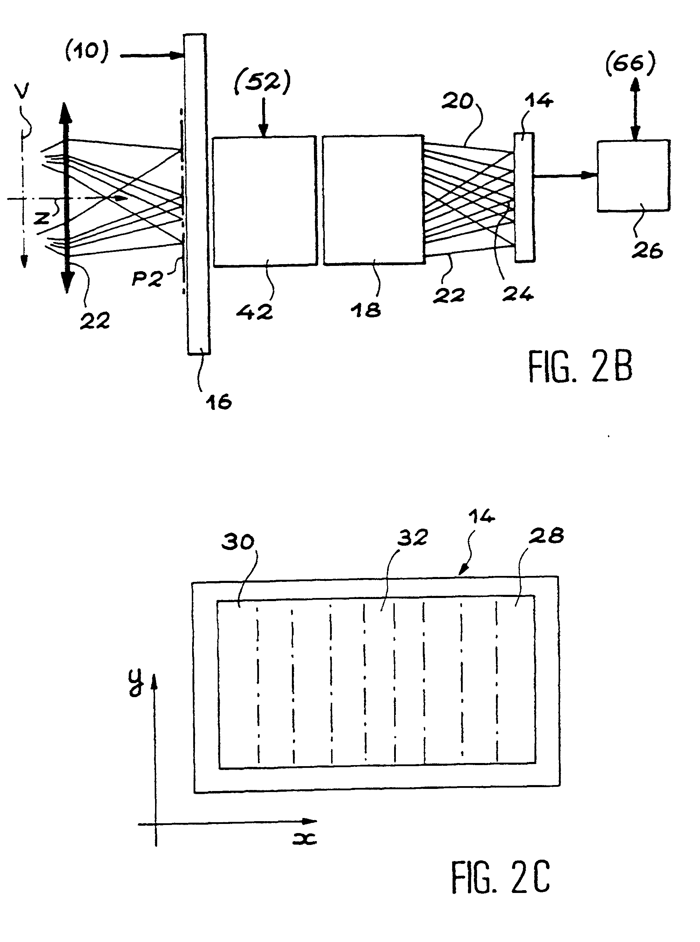

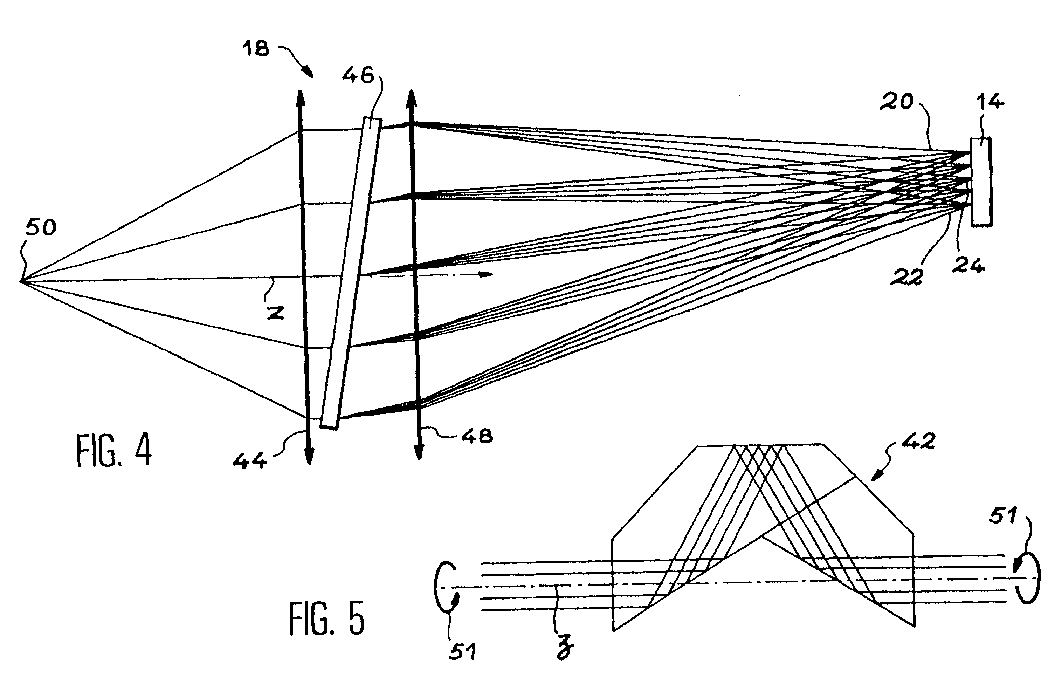

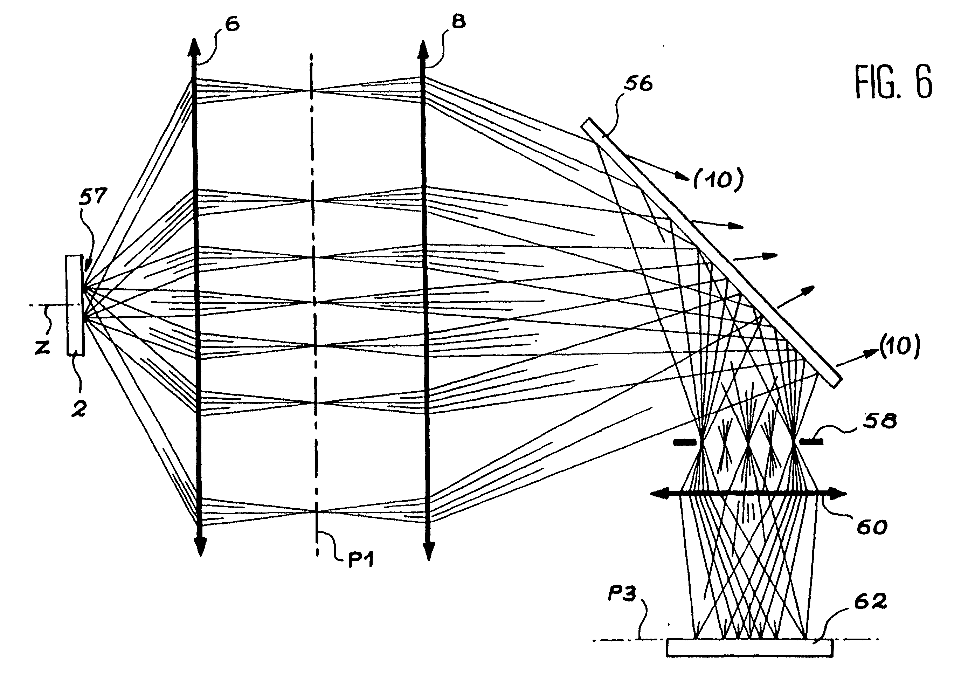

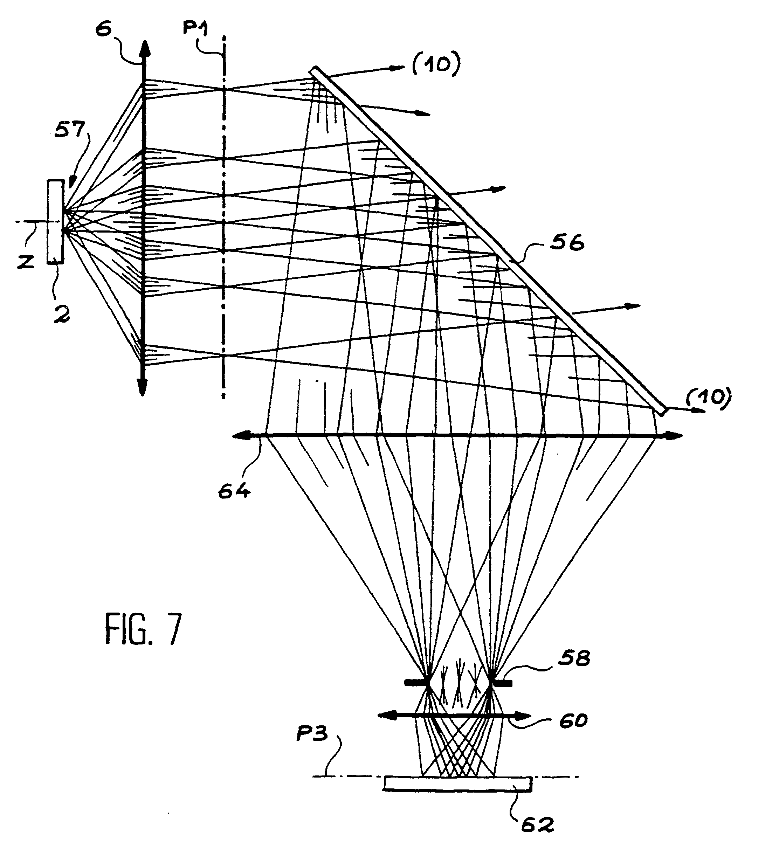

La présente invention sera mieux comprise à la lecture de la description d'exemples de réalisation donnés ci-après, à titre purement indicatif et nullement limitatif, en faisant référence aux dessins annexés sur lesquels :
■ la figure 1 est une vue schématique d'une zone d'un objet que l'on veut mesurer avec un dispositif conforme à l'invention suivant un plan d'observation déterminé,
■ la figure 2A est une vue schématique d'un mode de réalisation particulier du dispositif objet de l'invention dans ce plan d'observation,
■ la figure 2B est une vue schématique et partielle de ce mode de réalisation particulier dans un plan qui est perpendiculaire à ce plan d'observation et dans lequel la lumière de la zone de mesure est dispersée conformément à l'invention,
■ la figure 2C illustre schématiquement les informations collectées dans le plan du capteur faisant partie du dispositif des figures 2A et 2B,
■ la figure 3 est une vue schématique de moyens de mise en rotation d'un objet à mesurer dans un dispositif conforme à l'invention,
■ la figure 4 illustre schématiquement un exemple de moyens de dispersion de lumière qui est utilisable dans l'invention,
■ la figure 5 illustre schématiquement un exemple de moyens dé-rotateurs qui est utilisable dans l'invention, et
■ les figures 6 et 7 sont des vues schématiques et partielles de deux modes de réalisation particuliers de l'invention, permettant tout deux l'éclairage d'un objet à mesurer.

### EXPOSÉ DÉTAILLÉ DE MODES DE RÉALISATION PARTICULIERS

Sur la figure 1, on voit un objet 2, par exemple un écran d'affichage que l'on a allumé (ou un écran de projection éclairé par des moyens non représentés).

On souhaite mesurer la répartition spatiale de l'émission spectrale d'une zone 4 de la surface de l'objet 2, appelée « zone de mesure ».

Pour ce faire, on utilise un dispositif conforme à l'invention dont on voit seulement l'axe optique Z sur la figure 1. On place la zone de mesure 4 en regard de ce dispositif, de façon que l'axe optique Z de ce dernier soit perpendiculaire à la surface de l'objet et passe par le centre O de la zone de mesure 4. On voit également sur la figure 1 deux autres axes X et Y de la surface de l'objet 2, tels que le trièdre OXYZ soit un trièdre trirectangle direct.

Pour mesurer une autre zone de l'objet 2, il suffit de déplacer cet objet par rapport au dispositif (ou l'inverse) de façon à mettre cette autre zone en regard du dispositif.

On voit aussi sur la figure 1 un axe U du plan OXY. Cet axe U définit, avec l'axe Z, un plan d'observation de la zone de mesure 4. On a également représenté un axe d'observation D inclus dans ce plan d'observation.

L'angle entre l'axe X et l'axe U est noté ϕ et appelé « azimut ». L'angle entre l'axe Z et l'axe D (formant une direction d'observation) est noté θ. On voit aussi sur la figure 1 un axe V de la surface de l'objet, qui est perpendiculaire à l'axe U.

Un exemple de dispositif conforme à l'invention, permettant la mesure de la zone 4 de la figure 1, est schématiquement représenté sur la figure 2A dans le plan d'observation défini par les axes U et Z, l'axe Z étant, comme on l'a vu, l'axe optique de ce dispositif. Ce plan d'observation est ainsi le plan de la section droite de la zone 4 en cours d'analyse.

Le dispositif de la figure 2A comprend un ensemble de conversion angulaire-planaire comprenant successivement un premier objectif convergent 6, un deuxième objectif convergent 8 ou objectif de champ (« field objective ») et un diaphragme 10.

Au sujet d'un tel ensemble de conversion angulaire-planaire, on se reportera aux documents [1] à [3], en particulier au document [3].

La surface de l'objet 2 en cours d'analyse est de préférence dans le plan focal objet du premier objectif convergent 6. De plus, cet objectif 6 réalise, dans son plan de Fourier P1, la transformée de Fourier optique de la zone de mesure 4.

Cette transformée de Fourier permet de représenter sous forme plane la répartition angulaire du flux lumineux émis par l'objet 2 dans la zone de mesure 4. Cette image de la répartition angulaire est donc formée dans le plan P1.

Le deuxième objectif convergent 8 est placé à proximité du plan de Fourier P1 et permet, en association avec l'objectif 6, d'assurer la conjugaison optique entre la zone de mesure 4 et le diaphragme 10 ou plus exactement l'ouverture de ce diaphragme.

L'ensemble de conversion angulaire-planaire formé par les objectifs 6 et 8 et le diaphragme 10 est tel que la surface apparente de la zone de mesure 4, quand elle est observée à travers le diaphragme, pour toute direction d'observation D (repérée par un angle θ) d'un plan d'observation quelconque, a une valeur approximativement constante S₀. En particulier cette surface apparente a la valeur S₀ quand on l'observe suivant l'axe optique Z.

La projection de cette surface apparente sur le plan XOY de la zone de mesure 4 varie donc approximativement comme S₀/cosθ.

Le diaphragme 10 dont la taille et la forme déterminent celles de la zone de mesure suivant l'axe optique Z est avantageusement de forme circulaire. La zone de mesure est ainsi de forme elliptique et, si l'on note D₀ le petit axe de cette zone, son grand axe vaut alors approximativement D₀/cosθ. Ce grand axe est dans ce cas contenu dans le plan formé par l'axe optique Z et la direction de mesure D.

Comme on l'a vu, ce diaphragme est optiquement conjugué de la zone 4 au moyen des objectifs 6 et 8.

Lors de la fabrication du dispositif de la figure 2A, on choisit le grandissement (rapport de la taille de l'ouverture du diaphragme 10 à la taille de la zone de mesure 4) que l'on souhaite introduire lors de cette conjugaison.

Le dispositif de la figure 2A comprend aussi un autre objectif 12 ou objectif relais (« relay objective ») que l'on place à la suite du diaphragme 10, de préférence à proximité de ce dernier, de façon à transporter l'image de la transformée de Fourier, qui se trouve dans le plan P1, dans un deuxième plan P2. Cette transformation peut s'accompagner d'une mise à l'échelle de façon à réduire l'image qui se trouve dans le plan P1 à une taille compatible avec un capteur d'images 14 que comprend le dispositif de la figure 2A et avec le reste des moyens optiques de ce dispositif.

Le dispositif de la figure 2A comprend aussi des moyens de sélection d'une section droite, ou portion, de l'image qui est présente dans le plan de Fourier P1.

Dans l'exemple considéré, cette section ou portion est avantageusement disposée de façon à passer par l'axe optique Z du dispositif. Les moyens de sélection réalisent dans ce cas une sélection à azimut constant (angle ϕ de la figure 1).

Ces moyens de sélection peuvent être placés indifféremment dans le plan P1 ou le plan P2.

Dans l'exemple considéré on utilise, en tant que moyens de sélection, une fente rectiligne 16 formée dans un matériau opaque. Dans cet exemple, la fente 16 est dans le plan formé par les axes U et Z et elle est parallèle à l'axe U.

Le dispositif de la figure 2A comprend aussi des moyens 18 de dispersion de lumière comprenant par exemple un réseau de diffraction (« diffraction grating ») utilisé en transmission ou en réflexion ou un prisme. Ces moyens de dispersion sont placés après le plan P2. De plus, ces moyens de dispersion sont avantageusement placés de façon à ce que la direction de dispersion soit perpendiculaire à la direction de sélection (direction de la fente 16).

La figure 2B est une vue schématique et partielle de la figure 2A où l'on voit ces moyens de dispersion 18. Dans le cas de la figure 2B, ce dispositif est montré dans la direction ou plus exactement le plan qui est perpendiculaire à la section droite d'analyse c'est-à-dire dans le plan de la dispersion. Dans l'exemple considéré, il s'agit du plan défini par les axes Z et V.

La lumière ainsi dispersée parvient au capteur 14 et, suivant la composition spectrale de la lumière émise par la zone de mesure considérée 4, peut aller d'un faisceau de lumière rouge 20 jusqu'à un faisceau de lumière violette 22 en passant par un faisceau de lumière verte 24.

Le capteur d'images 14 est un capteur bidimensionnel (comprenant par exemple une matrice de photodétecteurs ou un dispositif CCD) et permet d'analyser, pour une position donnée des moyens de sélection, d'une part dans une direction l'intensité lumineuse en fonction de l'angle θ et d'autre part, dans la direction perpendiculaire, l'intensité lumineuse en fonction de la longueur d'onde.

On dispose avantageusement ce capteur 14 de façon que ses axes correspondent aux deux directions mentionnées ci-dessus.

Lorsque ce capteur est un capteur de type CCD, la direction de dispersion, si elle est alignée perpendiculairement aux colonnes de ce capteur de type CCD, peut permettre, par utilisation d'un groupement des charges contenues dans les pixels (« binning »), de moduler la sensibilité du dispositif de mesure en fonction de la longueur d'onde.

Le capteur 14 est associé à des moyens électroniques de traitement 26 destinés à traiter les informations recueillies par le capteur et d'associer à chaque point de la section droite mesurée la réponse spectrale de la zone de mesure 4. Cette information est corrigée de la réponse propre du dispositif de mesure par une procédure d'étalonnage adaptée.

Les informations spectrales ainsi obtenues permettent, par pondération par des coefficients appropriés, de calculer les coordonnées colorimétriques pour chaque angle θ considéré.

Les moyens électroniques de traitement 26 sont munis de moyens d'affichage des résultats (non représentés).

On a symbolisé sur la figure 2C les signaux lumineux recueillis par le capteur 14. Ces signaux sont symbolisés dans le plan de ce capteur. Les points de ce plan sont repérés à l'aide de deux axes x et y. Selon l'axe y, on trouve les données relatives aux angles θ examinés et, selon l'axe x, on trouve les données relatives aux longueurs d'onde.

Une analyse des informations collectées grâce au capteur 14 donne donc bien les informations selon les divers angles d'incidence dans une section droite, pour toutes les longueurs d'onde du spectre visible qui se trouvent dans la lumière émise par la zone de mesure examinée.

Le dispositif des figures 2A et 2B permet ainsi de mesurer, pour une section quelconque dans le plan de Fourier P1, les caractéristiques de répartition spatiale et spectrale en même temps. Dans l'exemple considéré, cette section est une section d'azimut constant.

Lorsque les moyens de sélection permettent de sélectionner une section droite de l'image du plan P1, cette section droite passant par l'axe optique Z du dispositif (ce qui est le cas de l'exemple considéré), il est possible de faire tourner l'objet et donc la zone de mesure 4 autour de cet axe optique Z de façon à pouvoir étudier différentes sections droites de l'image contenue dans le plan P1, correspondant à différents azimuts, et ainsi reconstruire la réponse de la zone de mesure 4 dans tout le demi-espace d'analyse.

Ceci est schématiquement illustré sur la figure 3 où l'on voit l'objet 2 disposé sur un support 34 muni de moyens qui sont symbolisés par la flèche 36 et permettent de faire tourner l'objet 2 et donc la zone de mesure 4 autour de l'axe optique Z du dispositif de mesure 38 que l'on a décrit en faisant référence aux figures 2A et 2B.

Il est également possible de déplacer les moyens de sélection 16 dans le plan de Fourier P1 ou dans le plan P2 mentionné plus haut, de façon à reconstruire par balayage le comportement de la zone de mesure pour tous les angles θ et ϕ.

De préférence, ce déplacement est une rotation, autour de l'axe optique Z, de la fente 16 qui est placée, comme on l'a vu, dans le plan P1 ou dans le plan P2.

Comme on l'a symbolisé sur la figure 2A, cette fente est alors mise en rotation par des moyens mécaniques adaptés 40, comprenant par exemple un moteur ainsi que des moyens d'entraînement mécaniques de la fente en rotation et des moyens électroniques de commande associés.

Pour garantir que la dispersion de la lumière se fait orthogonalement à la section droite, les moyens de dispersion 18 doivent alors être liés en rotation (ce qui est réalisable par l'homme du métier) avec les moyens de sélection (la fente 16 dans l'exemple considéré).

De préférence, afin de simplifier l'analyse dans le plan du capteur 14, on ajoute au dispositif des figures 2A et 2B un dispositif dé-rotateur 42 que l'on place sur le chemin optique de la lumière de façon que l'on puisse conserver une même orientation des données recueillies par le capteur 14 quelle que soit la position angulaire de la fente 16.

On insère ce dispositif dé-rotateur 42 après cette fente 16 afin que ce dispositif dé-rotateur puisse jouer son rôle.

Lorsque les moyens de sélection (la fente 16 dans l'exemple considéré) sont disposés au niveau du plan P1, on place le dispositif dé-rotateur 42 entre l'objectif 8 et l'objectif 12 ou entre cet objectif 12 et les moyens de dispersion 18.

Lorsque ces moyens de sélection sont placés au niveau du plan P2, on place le dispositif dé-rotateur 42 entre ces moyens de sélection et les moyens de dispersion 18.

Dans le cas où l'on utilise ce dispositif dé-rotateur 42, il n'est plus nécessaire de lier en rotation ces moyens de dispersion avec les moyens de sélection (la fente 16 dans l'exemple considéré) car ces moyens de dispersion gardent une position fixe par rapport au capteur 14 du fait de la dé-rotation.

Ces moyens de dispersion de lumière 18 peuvent être fondés sur l'utilisation d'un ou de plusieurs réseaux de diffraction ou d'un ou de plusieurs prismes.

Un exemple de tels moyens de dispersion de lumière est schématiquement représenté sur la figure 4 et comprend successivement un objectif convergent 44, un réseau de diffraction 46 et un autre objectif convergent 48.

On voit sur cette figure 4 l'axe optique Z du dispositif de mesure utilisant cet exemple des moyens de dispersion. On notera que, dans cet exemple, le capteur 14 ne se trouve pas sur l'axe Z.

On précise que la figure 4 montre l'exemple des moyens de dispersion dans le plan où l'on observe la dispersion. Ce plan est perpendiculaire au plan de sélection considéré à la sortie du dispositif dé-rotateur, lorsque ce dernier est utilisé, ou considéré à la sortie de la fente 16 lorsque ce dispositif dé-rotateur n'est pas utilisé.

On voit que l'image 50 de la fente 16 est collimatée (le faisceau divergent issu de cette fente étant transformé en un faisceau de rayons parallèles) par l'objectif convergent 44.

Ce faisceau de rayons parallèles est envoyé au réseau de diffraction 46 (mais un prisme en matériau dispersif pourrait être utilisé à la place de ce réseau de diffraction). Le faisceau de rayons parallèles est alors dispersé en une multiplicité de faisceaux dont les longueurs d'onde sont différentes.

Ces faisceaux de longueurs d'onde différentes sont focalisés grâce à l'autre objectif convergent 48, les rayons lumineux de même longueur d'onde étant focalisés en un même point. L'image ainsi obtenue est alors recueillie par le capteur 14.

On revient maintenant sur le dispositif dé-rotateur 42.

L'objectif de ce dispositif dé-rotateur est d'effectuer une rotation de l'axe d'une image autour de son axe optique. Son utilisation dans le dispositif de mesure décrit en faisant référence aux figures 2A et 2B permet de réaligner les axes de l'image obtenue sur le capteur 14 quelle que soit la position angulaire des moyens de sélection 16.

En pratique, pour fabriquer un tel dispositif dé-rotateur, on utilise des prismes ou des miroirs.

On connaît divers dispositifs dé-rotateurs. A ce sujet on consultera par exemple le livre de W.J. Smith intitulé « Modern Optical Engineering »). A titre purement indicatif et nullement limitatif, pour réaliser un tel dispositif dé-rotateur on peut utiliser des prismes de type Dove, Abbe sans toit (« Roofless-Abbe ») ou Pechan.

L'exemple de dispositif dé-rotateur schématiquement représenté sur la figure 5 comprend un prisme de type Abbe sans toit. On a indiqué le trajet de la lumière dans un tel dispositif dé-rotateur pour un faisceau à rayons parallèles.

On voit aussi l'axe (géométrique) de rotation z de ce dispositif dé-rotateur qui est mis en rotation par des moyens appropriés, symbolisés par les flèches 51 de la figure 5. Cet axe z est aussi l'axe de rotation des moyens de sélection utilisés dans le dispositif des figures 2A et 2B.

Dans l'exemple de la figure 5, on utilise le fait que, si le dispositif dé-rotateur de cette figure est placé sur le trajet d'un faisceau lumineux, l'image résultante, obtenue à la sortie de ce dispositif dé-rotateur, fait l'objet d'une rotation d'un angle 2α lorsque le dispositif dé-rotateur subit une rotation d'angle α. Pour compenser une rotation d'azimut ϕ le dispositif dé-rotateur doit donc subir une rotation d'un angle α tel que ϕ = -2α.

Dans le dispositif de mesure conforme à l'invention de la figure 2A, le dispositif dé-rotateur 42 est mis en rotation grâce à des moyens appropriés 52, comprenant un moteur et des moyens électroniques de commandes associés, afin de compenser exactement la rotation du plan de sélection.

Les moyens électroniques de commande (non représentés), qui sont associés au dispositif dé-rotateur 42, sont couplés aux moyens électroniques de commande (non représentés), qui sont associés aux moyens de sélection 16.

Ce couplage est effectué grâce à des moyens de régulation 54 qui assurent que la relation ϕ = -2α a lieu avec la précision requise.

La mesure, sous flux lumineux, d'objets, en particulier d'objets réflectifs, peut être faite avec le dispositif des figures 2A et 2B en modifiant ce dispositif comme on va l'expliquer en faisant référence aux figures 6 et 7.

Un dispositif semi-réfléchissant 56 (cube séparateur ou analogue) est inséré dans le chemin optique, soit après l'objectif 8 (figure 6) soit entre les objectifs 6 et 8 (figure 7).

Les figures 6 et 7 détaillent le fonctionnement du dispositif de mesure ainsi modifié, sans montrer les éléments nécessaires à l'analyse spectrale, afin de rendre plus simple la description.

Le dispositif semi-réfléchissant 56 n'empêche pas la propagation des faisceaux lumineux en direction du reste du dispositif de mesure. Il est donc possible de faire une mesure tout en illuminant l'objet 2.

Considérons d'abord l'exemple du dispositif de mesure de la figure 6.

On veut illuminer une zone 57 de la surface de l'objet 2, qui inclut la zone de mesure 4 (dont il a été question dans la description des figures 1 et 2A). Un diaphragme 58 à ouverture de préférence circulaire, optiquement conjugué de la zone d'illumination 57 par les objectifs 6 et 8 (par l'intermédiaire des moyens semi-réfléchissants 56), est utilisé pour délimiter cette zone 57.

Les propriétés de conjugaison entre le diaphragme 58 et la zone d'illumination 57 sont comparables à celles qui sont appliquées entre la zone 4 et le diaphragme 10, en particulier pour ce qui concerne le grandissement et la compensation de surface qui varie comme 1/cosθ₁ où θ₁ est alors l'angle d'incidence, sur la zone 57, d'un faisceau lumineux lui parvenant du diaphragme 58.

Un objectif convergent 60, placé après le diaphragme 58 par rapport au dispositif semi-réfléchissant 56, réalise, en association avec l'objectif 8 (par l'intermédiaire du dispositif semi-réfléchissant 56 comme on le voit sur la figure 6), la conjugaison entre le plan de la transformée de Fourier P1 et un plan P3.

Une source lumineuse 62 est insérée dans ce plan P3. Cette source lumineuse 62 peut être une source étendue, une source ponctuelle placée en tout point du plan P3 ou toute autre source permettant de reproduire, au niveau de la zone d'illumination 57, la répartition angulaire d'illumination souhaitée.

Considérons ensuite l'exemple de la figure 7 où l'objectif 8 (non représenté) se trouve maintenant sur l'axe Z à droite du dispositif 56.

Un objectif convergent supplémentaire 64 est alors ajouté au dispositif de mesure de la figure 6, entre le dispositif semi-réfléchissant 56 et le diaphragme 58, comme on le voit sur la figure 7, afin de pouvoir, en association avec l'objectif 6, réaliser la conjugaison optique entre la zone d'illumination 57 et le diaphragme 58.

Revenons maintenant au dispositif de mesure de la figure 2A.

Afin de pouvoir commander ce dispositif de mesure et recueillir les données, les moyens électroniques 26 de traitement des signaux fournis par le capteur 14 et les moyens électroniques 40, 52 et 54 de commande des moyens de sélection 16 et du dispositif dé-rotateur 42 sont reliés à une unité de commande ou à un ordinateur de type quelconque 66.

Le dispositif de mesure que l'on vient de décrire remplit bien la fonction requise qui est d'obtenir rapidement, collectivement et simultanément des informations de répartition angulaire et spectrale de tout émetteur, réflecteur ou diffuseur de lumière.

Les capacités de ce dispositif de mesure sont susceptibles d'être adaptées aux demandes des utilisateurs :

On peut concecoir un dispositif « de base » conforme à l'invention, permettant la mesure dans une ou plusieurs sections droites.

Des capacités de mesure d'échantillons en mode réflectif (sous flux lumineux) peuvent être ajoutées à ce dispositif de base.

L'utilisation d'un dispositif dé-rotateur permet en outre d'analyser tous les azimuts possibles selon les besoins des utilisateurs.

Par exemple, dans une unité de production d'objets émetteurs ou réflecteurs du genre de ceux qui sont considérés ici, il est possible d'analyser seulement deux directions dont les azimuts valent respectivement ϕ = 0° et ϕ = 90°.

## Revendications

1. Dispositif de mesure de la répartition spatiale de l'émission spectrale d'une zone de mesure (4) d'un objet (2), ce dispositif étant **caractérisé en ce qu'**il comprend :
- un premier objectif (6) prévu pour former, dans le plan de Fourier (P1) de ce premier objectif, une première image constituant la transformée de Fourier optique de la zone de mesure,
- un premier diaphragme (10),
- un deuxième objectif (8) disposé entre le premier objectif (6) et le premier diaphragme et coopérant avec ce premier objectif (6) pour que l'ouverture du premier diaphragme soit optiquement conjuguée de la zone de mesure (4) par les premier et deuxième objectifs et que la zone de mesure, lorsqu'elle est observée à travers le premier diaphragme (10), ait une surface apparente approximativement indépendante de la direction d'observation, les premier et deuxième objectifs ayant un axe optique commun (Z) qui constitue l'axe optique du dispositif,
- un objectif de transfert (12), placé après le premier diaphragme (10) pour transporter la première image vers un capteur bidimensionnel d'images (14),
- le capteur bidimensionnel d'images (14)
- des moyens de traitement (26) des signaux fournis par le capteur d'images, **caractérisé par**
- des moyens (16) de sélection d'une portion rectiligne de la première image suivant une direction de sélection,
- des moyens (18) de dispersion de lumière, prévus pour disperser la lumière correspondant à la portion sélectionnée de la première image,
- le capteur bidimensionnel d'images (14) étant apte à recevoir la lumière ainsi dispersée et fournir des signaux représentatifs de cette lumière dispersée, et
- les moyens (26) de traitement de ces signaux étant aptes à déterminer la réponse spectrale de la zone de mesure (4) pour chaque point de la portion rectiligne de la première image.

2. Dispositif selon la revendication 1, dans lequel le premier diaphragme (10) a une ouverture circulaire.

3. Dispositif selon l'une quelconque des revendications 1 et 2, dans lequel les moyens de dispersion (18) sont aptes à disperser la lumière suivant une direction de dispersion qui est perpendiculaire à la direction de sélection.

4. Dispositif selon l'une quelconque des revendications 1 à 3, dans lequel les moyens de sélection comprennent une fente rectiligne (16) qui est formée à travers un matériau opaque à la lumière issue de l'objet (2).

5. Dispositif selon l'une quelconque des revendications 1 à 4, dans lequel la direction de sélection passe par l'axe optique (Z) du dispositif.

6. Dispositif selon la revendication 5, comprenant en outre des moyens (34, 36) de rotation de l'objet (2) autour de l'axe optique (Z) du dispositif.

7. Dispositif selon l'une quelconque des revendications 1 à 5, comprenant en outre des moyens (40) de déplacement des moyens de sélection (16), de telle façon que la direction de sélection balaye la première image, les moyens de sélection sélectionnant ainsi des portions rectilignes successives de cette première image.

8. Dispositif selon la revendication 7, dans lequel les moyens de sélection comprennent une fente rectiligne (16) qui est formée à travers un matériau opaque à la lumière issue de l'objet (2) et qui définit la direction de sélection, cette fente passant par l'axe optique (Z) du dispositif, et dans lequel les moyens de déplacement sont des moyens (40) de rotation de la fente autour de cet axe optique et les moyens de dispersion (18) sont aptes à disperser la lumière suivant une direction de dispersion qui est maintenue perpendiculaire à la direction de sélection et donc à la fente.

9. Dispositif selon la revendication 7, dans lequel les moyens de sélection comprennent une fente rectiligne (16) qui est formée à travers un matériau opaque à la lumière issue de l'objet (2) et qui définit la direction de sélection, cette fente passant par l'axe optique (Z) du dispositif, et dans lequel les moyens de déplacement sont des moyens (40) de rotation de la fente autour de cet axe optique et le dispositif comprend en outre des moyens dé-rotateurs (42) qui sont disposés entre la fente (16) et les moyens de dispersion (18) et prévus pour maintenir constante l'orientation de la lumière dispersée qui est reçue par le capteur (14).

10. Dispositif selon l'une quelconque des revendications 1 à 9, comprenant en outre une source lumineuse (62) et des moyens semi-réfléchissants (56) prévus pour réfléchir la lumière émise par cette source lumineuse vers l'objet (2) afin d'illuminer une zone (57) de celui-ci contenant la zone de mesure (4) et pour laisser passer la lumière qui est issue de cette zone de mesure (4) ainsi éclairée et qui est dirigée vers le premier diaphragme (10).

11. Dispositif selon la revendication 10, dans lequel les moyens semi-réfléchissants (56) sont disposés entre le deuxième objectif (8) et le premier diaphragme (10) et le dispositif comprend en outre :
- un deuxième diaphragme (58) dont l'ouverture délimite la zone illuminée (57), cette ouverture du deuxième diaphragme étant optiquement conjuguée de la zone illuminée par l'ensemble formé par les premier et deuxième objectifs (6, 8), et
- un troisième objectif (60),
la source lumineuse (62) étant disposée dans un plan (P3) qui est optiquement conjugué du plan de Fourier (P1) du premier objectif (6) par l'ensemble formé par les deuxième et troisième objectifs (8, 60).

12. Dispositif selon la revendication 10, dans lequel les moyens semi-réfléchissants (56) sont disposés entre le premier objectif (6) et le deuxième objectif (8) et le dispositif comprend en outre :
- des troisième et quatrième objectifs (60, 64), et
- un deuxième diaphragme (58) dont l'ouverture délimite la zone illuminée (57), cette ouverture du deuxième diaphragme étant optiquement conjuguée de la zone illuminée par l'ensemble formé par les premier et quatrième objectifs (6, 64),
la source lumineuse (62) étant disposée dans un plan (P3) qui est optiquement conjugué du plan de Fourier (P1) du premier objectif (6) par l'ensemble formé par les troisième et quatrième objectifs (60, 64).

## Patentansprüche

1. Vorrichtung zum Messen der räumlichen Verteilung einer Spektralemission einer Messzone (4) eines Gegenstands (2),
wobei diese Vorrichtung **dadurch gekennzeichnet ist, dass** sie umfasst:
- ein erstes Objektiv (6), das dazu vorgesehen ist, in der Fourier-Ebene (P1) dieses ersten Objekts ein erstes Bild zu erzeugen, das die erste optische Fourier-Transformierte der Messzone darstellt,
- eine erste Membran (10),
- ein zweites Objektiv (8), das zwischen dem ersten Objektiv (6) und der ersten Membran angeordnet ist und mit diesem ersten Objektiv (6) zusammenwirkt, damit die Öffnung der ersten Membran mit der Messzone (4) durch die ersten und zweiten Objektive optisch in Übereinstimmung gebracht wird, und damit die Messzone, wenn sie über die erste Membran (10) beobachtet wird, eine von der Beobachtungsrichtung fast unabhängige Scheinoberfläche aufweist, wobei das erste und zweite Objektiv eine gemeinsame optische Achse (Z) haben, welche die optische Achse der Vorrichtung bildet,
- ein nach der ersten Membran (10) angeordnetes Übertragungsobjektiv (12) zur Übertragung des ersten Bildes zu einem zweidimensionalen Bilderfassungselement (14),
- das zweidimensionale Bilderfassungselement (14),
- Behandlungsmittel (26) von durch das Bilderfassungselement gelieferten Signalen,
**gekennzeichnet durch**
- Mittel (16) zur Auswahl eines geradlinigen Abschnitts des ersten Bildes gemäß einer Auswahlrichtung,
- Mittel (18) zur Streuung bzw. Verteilung von Licht, die vorgesehen sind, um das dem ausgewählten Abschnitt des ersten Bildes entsprechende Licht zu streuen bzw. zu verteilen,
- wobei das zweidimensionale Bilderfassungselement (14) das so verteilte Licht empfangen kann und für dieses verteilte Licht repräsentative Signale liefern kann, und
- Mittel (26) zur Behandlung dieser Signale, die die Spektralantwort der Messzone (4) für jeden Punkt des geradlinigen Abschnitts des ersten Bildes bestimmen können.

2. Vorrichtung nach Anspruch 1, wobei die erste Membran (10) eine kreisförmige Öffnung aufweist.

3. Vorrichtung nach einem der Ansprüche 1 oder 2, wobei die Streu- bzw. Verteilungsmittel (18) in der Lage sind, das Licht in einer zur Auswahlrichtung senkrechten Verteilungsrichtung zu verteilen.

4. Vorrichtung nach einem der Ansprüche 1 bis 3, wobei die Auswahlmittel einen geradlinigen Spalt (16) aufweisen, der durch ein Material gebildet ist, das gegenüber dem vom Gegenstand (2) kommenden Licht undurchlässig ist.

5. Vorrichtung nach einem der Ansprüche 1 bis 4, wobei die Auswahlrichtung durch die optische Achse (Z) der Vorrichtung hindurchgeht.

6. Vorrichtung nach Anspruch 5, ferner umfassend Mittel (34,36) zur Drehung des Gegenstandes (2) um die optische Achse (Z) der Vorrichtung.

7. Vorrichtung nach einem der Ansprüche 1 bis 5, ferner umfassend Mittel (40) zur Verschiebung bzw. Versetzung der Auswahlmittel (16) derart, dass die Aüswahlrichtung das erste Bild abtastet, wobei die Auswahlmittel auf diese Weise aufeinanderfolgende geradlinige Abschnitte dieses ersten Bildes auswählen.

8. Vorrichtung nach Anspruch 7, wobei die Auswahlmittel einen geradlinigen Spalt (16) umfassen, der quer durch ein Material ausgebildet ist, das gegenüber dem vom Gegenstand (2) kommenden Licht undurchlässig ist und das die Auswahlrichtung festlegt, wobei dieser Spalt durch die optische Achse (Z) der Vorrichtung hindurchgeht, und wobei .die Verschiebemittel Mittel (40) zur Drehung des Spaltes um diese optische Achse sind und die Verteilungsmittel (18) in der Lage sind, das Licht in einer Verteilungsrichtung zu verteilen, die senkrecht zur Auswahlrichtung und damit zum Spalt gehalten wird.

9. Vorrichtung nach Anspruch 7, wobei die Auswahlmittel einen geradlinigen Spalt (16) umfassen, der quer durch ein Material ausgebildet ist, das gegenüber dem vom Gegenstand (2) kommenden Licht undurchlässig ist und das die Auswahlrichtung festlegt, wobei dieser Spalt durch die optische Achse (Z) der Vorrichtung hindurchgeht, und wobei die Verschiebemittel Mittel (40) zur Drehung des Spalts um diese optische Achse sind und die Vorrichtung außerdem Gegendrehmittel (42) umfassen, die zwischen dem Spalt (16) und den Verteilungsmitteln (18) angeordnet sind und dazu vorgesehen sind, die Ausrichtung des verteilten Lichts, das von dem Messfühler (14) empfangen wird, konstant zu halten.

10. Vorrichtung nach einem der Ansprüche 1 bis 9, ferner umfassend eine Lichtquelle (62) und halb-reflektierenden Mitteln (56), die dazu vorgesehen sind, das von dieser Lichtquelle emittierte Licht zu dem Gegenstand (2) hin zu reflektieren, um eine die Messzone (4) enthaltende Zone (57) desselben zu beleuchten, und um das Licht, das aus dieser so beleuchteten Messzone (4) hervortritt und das zur ersten Membran (10) hin gerichtet ist, passieren zu lassen.

11. Vorrichtung nach Anspruch 10, wobei die halb-reflektierenden Mittel (56) zwischen dem zweiten Objektiv (8) und der ersten Membran (10) angeordnet sind, und die Vorrichtung ferner umfasst :
- eine zweite Membran (58), deren Öffnung die beleuchtete Zone (57) begrenzt, wobei diese Öffnung der zweiten Membran optisch der Zone zugeordnet ist, die von der von dem ersten und zweiten Objektiv (6,8) gebildeten Einheit beleuchtet wird, und
- ein drittes Objektiv (60),
wobei die Lichtquelle (62) in einer Ebene (P3) angeordnet ist, die optisch der Fourier-Ebene (P1) des ersten Objektivs (6) durch die von dem zweiten und dritten Objektiv (8,60) gebildete Einheit zugeordnet ist.

12. Vorrichtung:nach Anspruch 10, wobei die halb-reflektierenden Mittel (56) zwischen dem ersten Objektiv (6) und dem zweiten Objektiv (8) angeordnet sind, und die Vorrichtung ferner umfasst:
- dritte und vierte Objektive (60,64), sowie
- eine zweite Membran (58), deren Öffnung die beleuchtete Zone (57) begrenzt, wobei diese Öffnung der zweiten Membran optisch der von der durch die ersten und vierten Objektive (6,64) gebildeten Einheit beleuchteten Ozone zugeordnet ist,
wobei die Lichtquelle (62) in einer Ebene (P3) angeordnet ist, die optisch der Fourier-Ebene (P1) des ersten Objektivs (6) durch die von dem dritten und vierten Objektiv (60,64) gebildete Einheit zugeordnet ist.

## Claims

1. Device for measuring the space and spectral distribution of a measurement zone (4) of an object (2), this device being **characterized in that** it comprises:
- a first lens (6) envisaged to form, in the Fourier plane (P1) of this first lens, a first image constituting the optical Fourier transform of the measurement zone,
- a first diaphragm (10),
- a second lens (8) set between the first lens (6) and the first diaphragm and cooperating with this first lens (6) so that the opening of the first diaphragm is conjugated optically with the measurement zone (4) by the first and second lenses and that the measurement zone, when it is observed through the first diaphragm (10), has an apparent surface approximately independent of the direction of observation, the first and second lenses having a common optical axis (Z) which constitutes the optical axis of the device,
- a transfer lens (12), placed downstream of the first diaphragm (10), for the transfer of the first image to a bidimensional image sensor (14),
- the bidimensional image sensor (14),
- means (26) for processing signals supplied by the image sensor,
**characterized by**
- means (16) for selection of a rectilinear portion of the first image following a direction of selection,
- means (18) for dispersion of light, envisaged to disperse the light corresponding to the selected portion of the first image,
- the bidimensional image sensor (14), being able to receive the thus dispersed light and to provide signals representative of said dispersed light, and
- the means (26) for processing said signals, being able to determine the spectral response of the measurement zone (4) for each point of the rectilinear portion of the first image.

2. Device according to claim 1, in which the first diaphragm (10) has a circular opening.

3. Device according to one or the other of claims 1 and 2, in which the dispersion means (18) are able to disperse the light following a dispersion direction which is perpendicular to the direction of selection.

4. Device according to any one of claims 1 to 3, in which the means of selection comprise a rectilinear slit (16) which is formed through a material opaque to the light issuing from the object (2).

5. Device according to any one of claims 1 to 4, in which the direction of selection passes along the optical axis (Z) of the device.

6. Device according to claim 5, comprising in addition means (34, 36) of rotation of the object (2) around the optical axis (Z) of the device.

7. Device according to any one of claims 1 to 5, comprising in addition means (40) of displacement of the means of selection (16), in such a way that the direction of selection scans the first image, the means of selection thus selecting the successive rectilinear portions of this first image.

8. Device according to Claim 7, in which the means of selection comprise a rectilinear slit (16) which is formed through a material opaque to the light issuing from the object (2) and which defines the direction of selection, this slit passing along the optical axis (Z) of the device, and in which the means of displacement are means (40) of rotation of the slit around this optical axis and the means of dispersion (18) are able to disperse the light following a direction of dispersion which is maintained perpendicular to the direction of selection and thus to the slit.

9. Device according to Claim 7, in which the means of selection comprise a rectilinear slit (16) which is formed through a material opaque to the light issuing from the object (2) and which defines the direction of selection, this slit passing along the optical axis (Z) of the device, and in which the means of displacement are means (40) of rotation of the slit around this optical axis and the device comprises in addition derotator means (42) which are set between the slit (16) and the means of dispersion (18) and are envisaged to maintain constant the orientation of the dispersed light which is received by the sensor (14).

10. Device according to any one of Claims 1 to 9, comprising in addition a luminous source (62) and semi-reflecting means (56) envisaged to reflect the light emitted by this luminous source towards the object (2) in order to illuminate a zone (57) of the latter containing the measurement zone (4) and to let pass the light which is issued from the measurement zone (4) thus illuminated and which is directed towards the first diaphragm (10).

11. Device according to Claim 10, in which the semi-reflecting means (56) are set between the second lens (8) and the first diaphragm (10) and the device also includes:
- a second diaphragm (58) whose opening defines the illuminated zone (57), this opening of the second diaphragm being optically conjugated with the illuminated zone by the ensemble formed by the first and second lenses (6, 8), and
- a third lens (60),
the luminous source (62) being set in a plane (P3) which is conjugated optically with the Fourier plane (P1) of the first lens (6) by the ensemble formed by the second and third lenses (8, 60).

12. Device according to Claim 10, in which the semi-reflecting means (56) are set between the first lens (6) and the second lens (8) and the device comprises in addition:
- third and fourth lenses (60, 64), and
- a second diaphragm (58) whose opening defines the illuminated zone (57), this opening of the second diaphragm being conjugated optically with the illuminated zone by an ensemble formed by the first and fourth lenses (6, 64),
the luminous source (62) being set in a plane (P3) which is conjugated optically with the Fourier plane (P1) of the first lens (6) by the ensemble formed by the third and fourth lenses (60, 64).
